Europäisches Patentamt

European Patent Office

Office européen des brevets

(11) Veröffentlichungsnummer: **0 475 151 A1**

# EUROPÄISCHE PATENTANMELDUNG

(21) Anmeldenummer: **91114089.5**

(22) Anmeldetag: **22.08.91**

(51) Int. Cl.5: **B65G 1/02**, E04B 1/30

(30) Priorität: **22.08.90 DE 4026557**

(43) Veröffentlichungstag der Anmeldung:
**18.03.92 Patentblatt 92/12**

(84) Benannte Vertragsstaaten:
**AT BE CH DE DK FR LI NL**

(71) Anmelder: **HOFFMANN INDUSTRIEBAU GMBH**
**Triftenstrasse 115**
**W-4937 Lage/Lippe(DE)**

(72) Erfinder: **Hoffmann, Dietrich**
**Goetheweg 61**
**W-4937 Lage/Lippe(DE)**

(74) Vertreter: **TER MEER - MÜLLER -**
**STEINMEISTER & PARTNER**
**Artur-Ladebeck-Strasse 51**
**W-4800 Bielefeld 1(DE)**

(54) **Regalcontainer.**

(57) Ein Regalcontainer (10) weist eine tragende Rahmenkonstruktion (12) auf. Die Stützen (14) und Träger (16,18) der Rahmenkonstruktion (12) sind als Beton/Stahl-Verbundbauteile ausgebildet. Hierdurch wird ein höherer Feuerwiderstandswert des Containers erreicht. Wahlweise kann der erhöhte Feuerwiderstand auch durch eine Kühlwasserfüllung der Stahlprofile der Rahmenkonstruktion oder durch Besprühen der Stahlprofile mit Löschwasser aus einer Sprinkleranlage erreicht werden.

Fig. 1

Die Erfindung betrifft einen Regalcontainer gemäß dem Oberbegriff Anspruchs 1.

Ein herkömmlicher Regalcontainer dieser Art wird in dem DE-GM 86 32 864 beschrieben. Der Container weist eine offene, fachwerkartige Rahmenkonstruktion aus Stahlprofilen auf und ist an zumindest einer Längsseite offen, so daß das Lagergut beispielsweise mit Hilfe eine Gabelstaplers von der Längsseite des Containers her ein- und ausgelagert werden kann. Der Container ist üblicherweise in seinem Bodenbereich mit einer Auffangwanne zum Auffangen von Leckflüssigkeit versehen, so daß u.a. auch eine sichere Lagerung von Fässern mit umweltgefährdenden Flüssigkeiten ermöglicht wird. Die Abmessungen des Containers sind in einer bevorzugten Ausführungsform etwa den Abmessungen üblicher Frachtcontainer vergleichbar. Der Container ist somit zumindest in unbeladenen Zustand transportabel und kann in fertig montiertem Zustand vom Herstellungsbetrieb zum jeweiligen Einsatzort transportiert werden. Am Einsatzort läßt sich dann durch Nebeneinanderstellen und Übereinanderstapeln mehrerer gleichartiger Container ein komplexes Regallager errichten. Die Container sind insbesondere für die Aufstellung im Freien vorgesehen, wobei durch Stirnseiten- und Deckenverkleidungen der Container sowie durch zusätzlich angebrachte Gangüberdachungen ein ausreichender Wetterschutz gewährleistet wird. Wesentliche Vorteile eines solchen Lagers gegenüber einem festen Lagergebäude sind in der geringen Montagezeit am Einsatzort, flexiblen Änderungs- und Erweiterungsmöglichkeiten des Lagers sowie in beträchtlichen Rationalisierungseffekten zu sehen, die sich aus der werkseitigen Herstellung standardisierter Einheiten ergeben.

Ein Nachteil des herkömmlichen Regalcontainers besteht jedoch darin, daß der Feuerwiderstand im Fall eines Brandes relativ gering ist. Wenn die tragenden Stahlprofile des Containers im Brandfall über längere Zeit einer hohen Temperatur von beispielsweise 600 °C ausgesetzt sind, so verliert der Stahl seine Festigkeit, und es besteht die Gefahr, daß das Lager sich verzieht oder einstürzt. Hierdurch kommt es nicht nur zu einer Erhöhung des Brandschadens, sondern auch zu einer Behinderung der Löscharbeiten und einer Gefährdung der Löschmannschaften.

Aus dem DE-GM 87 04 772 ist eine Lagervorrichtung mit hohem Feuerwiderstandswert bekannt. Diese Lagervorrichtung ist als vorgefertigte Modulbaueinheit mit einem quaderförmigen Betongehäuse konzipiert. Weiterhin ist aus dem DE-GM 90 02 843 eine Lagervorrichtung bekannt, bei der die Rückwände und die Seitenwände der einzelnen Lagerräume durch übereinandergesetzte, im Grundriß U-förmige Betonelemente gebildet werden. Bei diesen Lösungen muß jedoch ein relativ hohes Transportgewicht der Lagervorrichtung bzw. ein relativ hoher Arbeitsaufwand für die Endmontage in Kauf genommen werden.

Durch die Erfindung wird demgegenüber ein Regalcontainer der eingangs genannten Gattung geschaffen, bei dem die tragende Rahmenkonstruktion einen hohen Feuerwiderstand aufweist.

Bei der Lösung nach Anspruch 1 wird dies dadurch erreicht, daß die Stützen und Träger der Rahmenkonstruktion als Beton/Stahl-Verbundbauteile ausgebildet sind.

Eine solche Verbundbauweise ist bereits im Hochbau, also bei der Erstellung fester Gebäude, erprobt worden. Die Verbundelemente weisen jeweils ein Hohlprofil, ein C-Profil oder ein Doppel-T-Profil aus Stahl auf, dessen Hohlräume bzw. offene Profilkammern mit armiertem oder unarmiertem Beton ausgefüllt sind. Es hat sich gezeigt, daß sich durch eine geeignete Dimensionierung der Profile ein Feuerwiderstandswert von 30 Minuten oder mehr erreichen läßt (Dorn, Haß Kordina, "Brandverhalten von Verbundstützen und - trägern", Mitteilungen Institut für Bautechnik 1988, Heft 4, S. 104-109). Weder im Containerbau noch im Regalbau ist jedoch bisher der Einsatz solcher Verbundelemente in Erwägung gezogen worden.

Durch die erfindungsgemäße Lösung wird die Möglichkeit geschaffen, unter Beibehaltung der Vorteile herkömmlicher Regalcontainer zu geringen Kosten ein Lager zu schaffen, daß den heutigen Sicherheitsanforderungen bei der Lagerung brennbarer Stoffe entspricht.

Die Unteransprüche 2 bis 6 und 9 betreffen zweckmäßige Ausgestaltungen des Regalcontainers nach Anspruch 1. In einer bevorzugten Ausführungsform sind die Stützen und Träger der Rahmenkonstruktion als Stahl-Hohlprofile ausgebildet, deren Hohlräume untereinander verbunden sind und einen einstückigen Betonkern enthalten.

In Anspruch 10 wird ein Herstellungsverfahren vorgeschlagen, bei dem mehrere getrennte, ebene Rahmen hergestellt und jeweils mit einem Betonkern ausgefüllt werden und bei dem man die Rahmen anschließend durch rechtwinklig zur Rahmenebene verlaufende, ebenfalls mit Beton ausgefüllte Stahlträger verbindet. Bei diesem Herstellungsverfahren besteht die Möglichkeit, für die Betonfüllung der verbindenden Stahlträger ein preisgünstigeres material zu verwenden als für die Füllung der Rahmen.

Eine alternative Maßnahme zur Erhöhung des Feuerwiderstands der Rahmenkonstruktion wird in Anspruch 7 vorgeschlagen. Gemäß dieser Lösung sind die Stützen und Träger als Stahl-Hohlprofile ausgebildet, deren Hohlräume mit einer Kühlflüssigkeit, beispielsweise mit Wasser ausgefüllt sind. Die Hohlräume der Rahmenkonstruktion stehen nach nach dem Prinzip kommunizierender Röhren mit einem Vorratstank in Verbindung, in dem sich ein ausreichender Wasservorrat befindet. Im Brandfall beginnt das Wasser in den Hohlprofilen zu sieden, so daß die Temperatur der Rahmenkonstruktion den Wert von 100 °C nicht nennenswert übersteigt. Durch Lüftungsöffnungen wird ein Entweichen des Wasserdampfes ermöglicht, so daß die Entstehung überhitzter Dampfblasen vermieden wird. Der Wassertank kann auf dem Dach des Containers angeordnet sein, oder sich in einem separaten Wasserturm befinden. Es ist auch möglich, mehrere Container an einen gemeinsamen Wassertank anzuschließen.

Als Alternative oder Ergänzung zu den Maßnahmen gemäß Anspruch 1 oder 7 wird in Anspruch 8 vorgeschlagen, den Container mit einer Sprinkleranlage auszustatten, bei der zumindest ein Teil der Sprühdüsen auf die tragenden Teile der Stahl-Rahmenkonstruktion gerichtet sind, so daß die Rahmenkonstruktion im Brandfall mit Wasser besprüht und hierdurch gekühlt wird. Regalcontainer mit integrierten Sprinkleranlagen sind bereits aus dem DE-GM 86 32 864 bekannt. Dort wird jedoch die Sprinkleranlage lediglich zum Löschen des Brandes, also zum Besprühen des Lagergutes eingesetzt. Der wesentliche Erfindungsgedanke bei der Lösung nach Anspruch 8 ist darin zu sehen, daß die Düsen gezielt auf die tragenden Bauteile der Rahmenkonstruktion gerichtet sind.

Im folgenden werden bevorzugte Ausführungsbeispiele der Erfindung anhand der Zeichnungen näher erläutert.

Es zeigen:

Fig. 1
eine perspektivische Ansicht eines Regalcontainers;

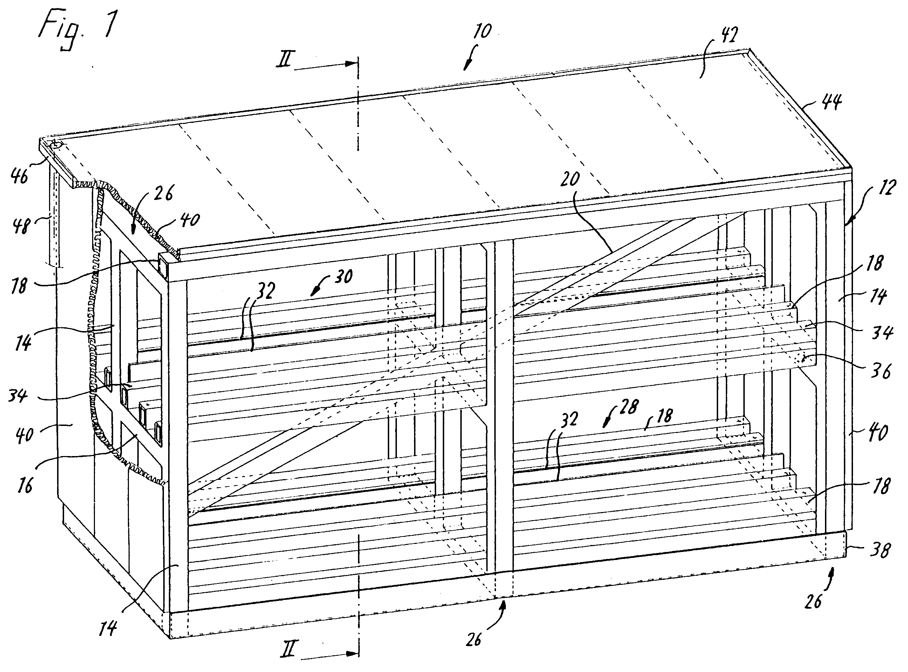

Fig. 2
einen Schnitt längs der Linie II-II in Fig. 1;

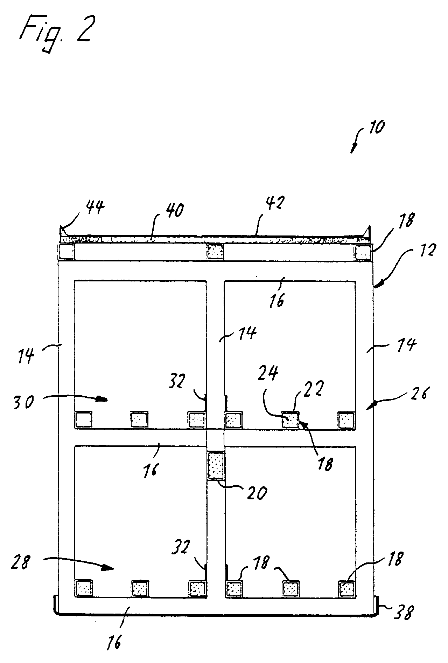

Fig. 3(A),(B) - 10(A),(B)
Front- und Schnittdarstellungen von abgwandelten Ausführungsbeispielen des Regalcontainers gem. Fig. 1 und 2;

Fig. 11
einen Regalcontainer mit einem Kühlwassertank;

Fig. 12
einen Regalcontainer mit einer Sprinkleranlage; und

Fig. 13
einen Schnitt durch den Verbindungsbereich zwischen Längs- und Querträgern eines Regalcontainers in Kammerbetonweise.

Der in Figur 1 gezeigte Regalcontainer 10 weist eine tragende Konstruktion 12 auf, die durch senkrechte Stützen 14, quer verlaufende waagerechte Träger 16, längs verlaufende waagerechte Träger 18 sowie eine Diagonalstrebe 20 gebildet wird. Bei den Stützen 14, den Trägern 16,18 und der Diagonalstrebe 20 handelt es sich jeweils um Verbundbauteile, die durch ein quadratisches Hohlprofil 22 aus Stahl (Fig. 2) und einen den Hohlraum des Stahlprofils ausfüllenden Betonkern 24 gebildet werden.

Die in der selben Ebene liegenden Stützen 14 und Träger 16 bilden jeweils ein gitterförmiges Rahmenelement 26 und sind derart miteinander verschweißt, daß die Hohlräume in den Stahlprofilen untereinander verbunden sind. Im gezeigten Beispiel sind drei Gitterelemente 26 vorgesehen, die sich an den Stirnseiten und in der Mitte des Containers befinden. Die längs verlaufenden Träger 18 liegen auf den quer verlaufenden Trägern 16 auf und er strecken sich durchgehend über die gesamte Länge des Containers. Durch die längs verlaufenden Träger 18 wird eine untere Lagerebene 28 sowie eine obere Lagerebene 30 in halber Höhe des Containers gebildet. Zwei weitere Träger 18 bilden die oberen Längskanten des Containers. Durch die Lagerebenen 28,30 und die Rahmenelemente 26 werden auf jeder Längsseite des Containers vier Gefache gebildet, in die jeweils mehrere Paletten nebeneinander eingestellt werden können. Durchschubsicherungen 32 verhindern, daß die Paletten über die Mitte des Containers hinausgeschoben werden.

Die Diagonalstrebe 20 verläuft längs einer Flächendiagonalen in der Längsmittelebene des Containers und dient zur Versteifung der Rahmenkonstruktion 12 gegenüber Scherkräften. Der Hohlraum in dem Stahlprofil der Diagonalstrebe 20 steht in der Mitte und an den Enden mit den Hohlräumen in den Stützen 14 und Trägern 16 der Rahmenelemente 26 in Verbindung. Die längs verlaufenden Träger 18 sind an den Positionen 34 mit den quer verlaufenden Trägern 16 verbolzt. In den auf den Trägern 16 aufliegenden Wänden der die Träger 18 bildenden Hohlprofile sind Durchbrüche 36 ausgespart, die mit entsprechenden Durchbrüchen in den Hohlprofilen der Träger 16 fluchten. Auf diese Weise stehen die Hohlräume sämtlicher Stahlprofile, die die tragende Rahmenkonstruktion 12 bilden, untereinander in Verbindung. Wenn die längs verlaufenden Träger 18 an den Enden zumindest vorübergehend abgedichtet werden, kann somit der gesamte Hohlraum der Rahmenkonstruktion über nicht gezeigte Einfüllöffnungen in einem Arbeitsgang mit relativ dünnflüssiger Betonmasse verfüllt werden, so daß ein einstückiger Betonkern gebildet wird. Durch geeignet in den Stahlprofilen angebrachte Entlüfungsöffnungen wird die Bildung von Luftblasen in den Hohlprofilen verhindert.

In Abwandlung des oben beschriebenen Herstellungsverfahrens ist es auch möglich, die Träger, Stützen und Streben bereits vor der Montage mit Beton zu verfüllen, dabei jedoch die Verbindungsbereiche frei zu lassen, so daß bei der Montage die notwendigen Verschraubungen hergestellt werden können. Die Endbereiche können dann nachträglich mit Beton ausgefüllt werden.

Die durchlaufenden, auf den Querträgern 16 aufliegenden Träger 18 weisen eine hohe Tragkraft auf, so daß in den Lagerebenen hohe Lasten aufgenommen werden können, ohne daß der Betonkern der Träger durch Biegebean spruchungen beschädigt wird.

Im gezeigten Ausführungsbeispiel wird der Regalboden jedes Gefaches durch drei Träger 18 gebildet, auf denen sich die Paletten unmittelbar abstülzen. Wahlweise kann jedoch auch jeweils der mittlere Träger 18 fortgelassen werden, oder es können zusätzliche Träger angebracht werden, um die Tragkraft zu erhöhen. Schließlich kann die Stellfläche der einzelnen Regalböden auch in üblicher Weise durch einen aufgelegten Gitterrost oder dergleichen gebildet werden. Die in Figur 1 gezeigte Konstruktion mit wenigstens drei als Verbundbauteile ausgebildeten Trägern 18 in jedem Regalboden hat jedoch den Vorteil, daß nicht nur die tragende Rahmenkonstruktion, sondern auch jeder Regalboden einen hohen Feuerwiderstand aufweist.

Die unteren Enden der Rahmenelemente 26 stehen in einer Auffangwanne 38, in der Leckflüssigkeit zurückgehalten werden kann, wenn der Regalcontainer zur Lagerung von Flüssigkeitsbehältern eingesetzt wird. Abweichend von dem gezeigten Ausführungsbeispiel kann im Bedarfsfall eine Auffangwanne mit größerem Auffangvolumen vorgesehen sein, bei der die Wannenwände an den Längs- und Stirnseiten des Containers 10 weiter hochgezogen sind. In diesem Fall stehen die Gitterelemente 26 auf Füßen über dem Wannenboden, damit sie nicht durch die Leckflüssigkeit angegriffen werden und damit sich die untere Lagerebene 28 in Höhe der Oberkante der Auffangwanne befindet.

Die Stirnflächen des Containers sind mit feuerhemmenden Platten 40 aus Steinwolle verkleidet. Das Dach des Containers wird ebenfalls durch feuerhemmende Platten 40 gebildet, die auf den oberen Trägern 18 aufliegen. Die obere Oberfläche des Daches ist durch Folienbahnen 42 wetterfest abgedichtet. Eine umlaufende Aufkantung 44 verhindert, daß Regenwasser an den Seitenwänden des Containers herabläuft oder herabtropft. Die Dachentwässerung erfolgt über einen an einer Stirnseite des Containers vorgesehenen Dachüberstand 46, in dem ein Fallrohr 48 angeschlossen ist.

Wenn mehrere gleichartige Container nebeneinandergestellt werden, ergeben sich aufgrund der Dachüberstände 46 jeweils schmale Zwischenräume zwischen den einzelnen Containern. Diese Zwischenräume können für die Unterbringung von zusätzlichen Installationen wie Belüftungssysteme, Heizungen und dergleichen genutzt werden.

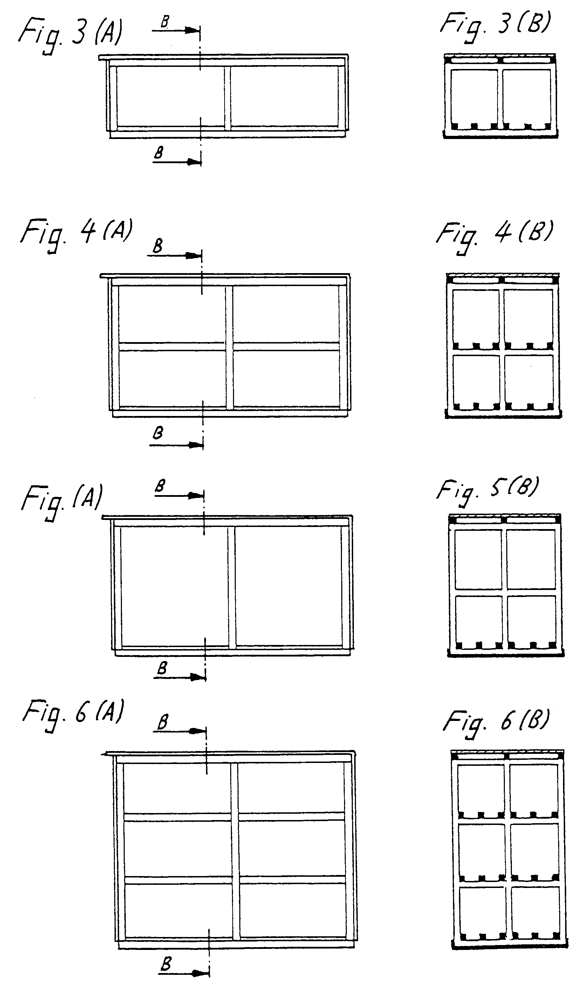

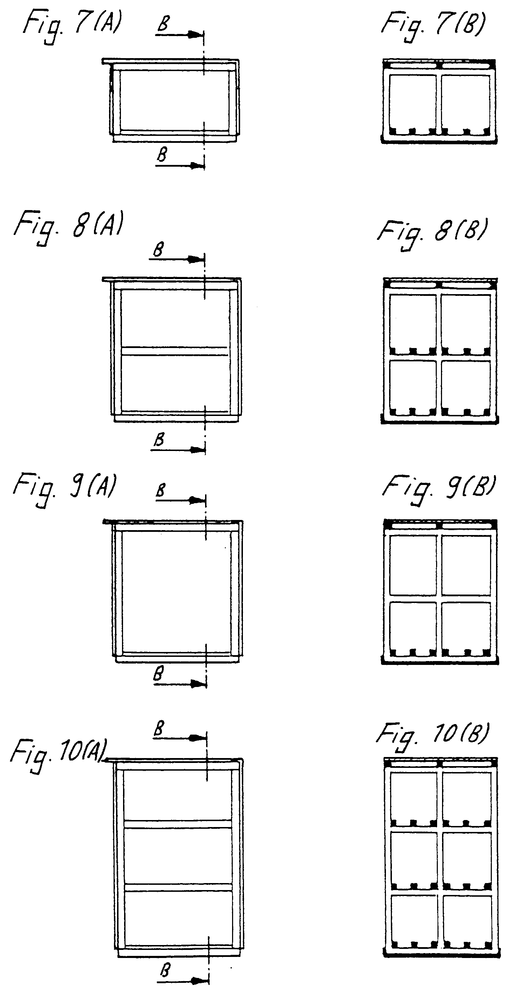

Die oben beschriebene Bauweise des Regalcontainers mit gitter- oder leiterartigen Rahmenelementen 26 und durchlaufenden Längsträgern 18 ermöglicht es, mit einer relativ geringen Anzahl unterschiedlicher Bauelemente eine große Vielfalt verschiedener Containertypen herzustellen. Beispiele denkbarer Containertypen sind in Fig. 3(A),-(B) bis 10(A),(B) dargestellt, wobei die Teilfigur (A) jeweils einen Container in der Frontansicht und die entsprechende Teilfigur (B) den gleichen Container in einem Querschnitt zeigt. Die in Fig. 3 bis 6 gezeigten Container unterscheiden sich in der Höhe und in der Anzahl der Lagerebenen, weisen jedoch die gleiche Länge auf und sind jeweils mit zwei nebeneinander angeordneten Gefachen versehen. Die Container gemäß Fig. 7 bis 10 weisen dagegen in jeder Lagerebene jeweils nur ein Gefach auf. Für die Container gemäß Fig. 3 bis 6 einerseits und die Container gemäß Fig. 7 bis 10 andererseits können jeweils die gleichen Längsträger 18 verwendet werden. Darüber hinaus können beispielsweise für die Container gemäß Fig. 3 und die Container gemäß Fig. 7 identische Gitterelemente 26 verwendet werden.

Neben den gezeigten Containertypen sind auch Regalcontainer denkbar, die lediglich etwa die halbe Tiefe der gezeigten Container aufweisen und nur von einer Seite her zugänglich sind.

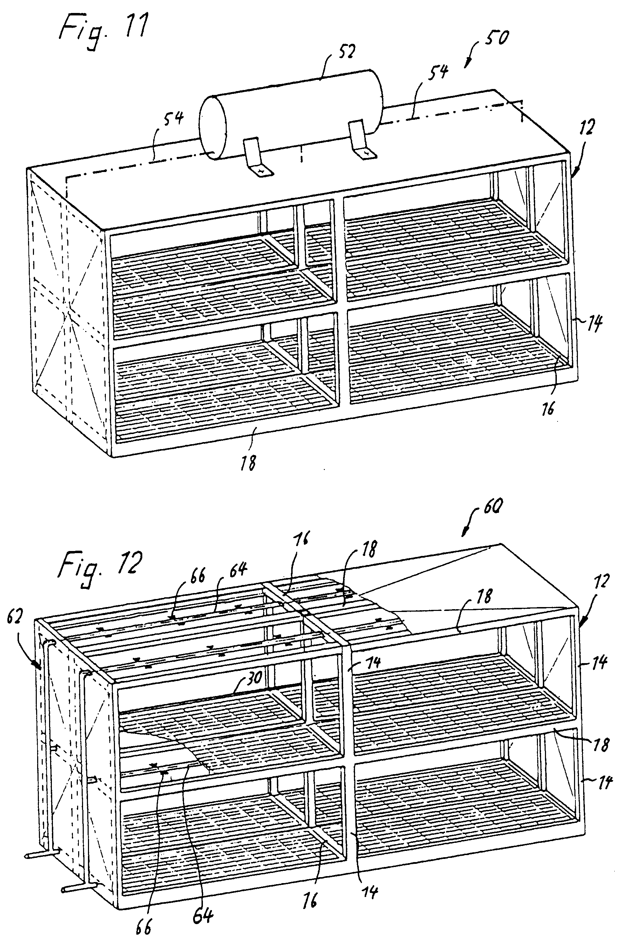

Fig. 11 zeigt ein Ausführungsbeispiel eines Regalcontainers 50, dessen tragende Rahmenkonstruktion 12 aus Stahl-Hohlprofilen besteht, deren Hohlräume untereinander verbunden sind. Anders als bei dem Ausführungsbeispiel nach Fig. 1 ist der so in den Profilen der Rahmenkonstruktion gebildete Hohlraum jedoch nicht mit Beton, sondern mit Wasser ausgefüllt, dem ein Frostschutzmittel zugesetzt ist. Auf dem Dach des Containers ist ein Vorratstank 52 installiert, der über Leitungen 54 mit dem Hohlraum der Rahmenkonstruktion verbunden ist. Im Brandfall wird die Rahmenkonstruktion 12 durch das in den Hohlräumen enthaltene Wasser gekühlt. Der beim Sieden des Wassers entstehende Dampf kann durch Lüftungsöffnungen entweichen, und der Wasserverlust wird aus dem Vorratstank 52 ersetzt. Der Feuerwiderstandswert des Containers 50 wird somit durch das Fassungsvermögen des Vorratstanks 52 bestimmt.

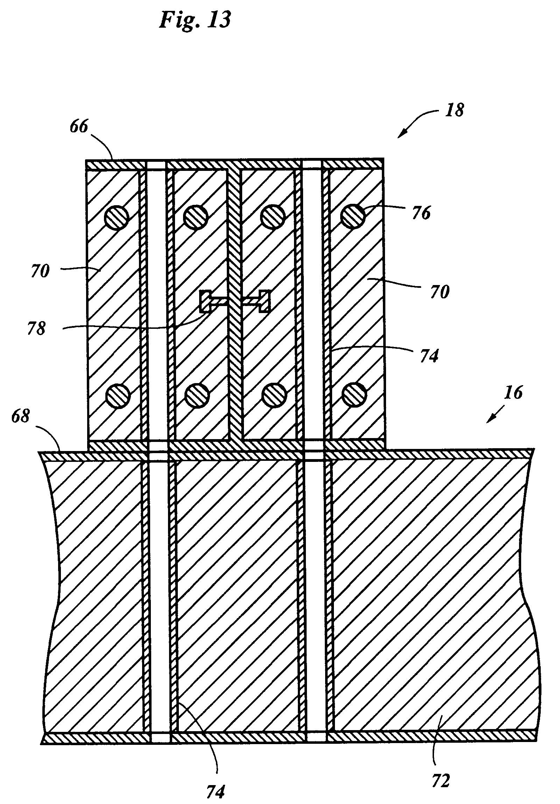

Fig. 12 zeigt als weiteres Ausführungsbeispiel einen Regalcontainer 60 mit einer Sprinkleranlage 62, die an eine nicht gezeigte Löschwasserquelle ange schlossen ist. Die Sprinklerrohre 64 verlaufen unter der Decke des Containers sowie an der Unterseite der oberen Lagerebene 30. Die Sprühdüsen 66 an den Sprinklerrohren 64 sind so gerichtet, daß die Längsträger 18 sowie auch die Querträger 16 und die Stützen 14 der Rahmenkonstruktion 12 mit Löschwasser besprüht und hierdurch gekühlt werden. Auf diese Weise läßt sich auch bei dem Regalcontainer 60 ohne Betonfüllung der Rahmenkonstruktion ein hoher Feuerwiderstand erreichen.

Wahlweise kann auch der Container gemäß Fig. 1 oder Fig. 11 mit einer entsprechenden Sprinkleranlage ausgestattet werden, um die dort vorgesehenen Maßnahmen zur Erhöhung des Feuerwiderstandes zu unterstützen,

Figur 13 zeigt ein modifiziertes Ausführungsbeispiel eines Regalcontainers, dessen Stützen und Träger als Beton-Stahl-Verbundbauteile ausgebildet sind. Bei dieser Ausführungsform wird die sogenannte Kammerbeton-Bauweise angewandt, d.h., die Stahlprofile sind als Doppel-T-Profile 66,68 ausgebildet, und die beiderseits des Mittelsteges des Doppel-T-Profils gebildeten Kammern 70,72 sind mit Beton verfüllt. Bei der Herstellung des Regalcontainers in dieser Ausführungsform werden ähnlich wie bei dem in Figur 1 gezeigten Container zunächst die senkrechten Stützen und die querverlaufenden Träger 16 zur Rahmenelementen miteinander verschweißt, deren Kammern 72 miteinander verbunden sind. Die auf den entgegengesetzten Seiten des Rahmens gebildeten Kammersysteme werden nacheinander mit Beton ausgegossen. Am Aufstellungsort des Containers werden die Rahmenelemente mit einem Kran aufgerichtet, und die ebenfalls mit Kammerbeton in den Kammern 70 versehenen längsverlaufenden Träger 18 werden auf die querverlaufenden Träger aufgelegt, so daß die gesamte Konstruktion durch das Eigengewicht der längsverlaufenden Träger 18 zumindest provisorisch stabilisiert wird. Die Verbindung zwischen den Trägern 16,18 an den Punkten 34 (Figur 1) erfolgt mit Hilfe nicht gezeigter Bolzen. Zu diesem Zweck werden gemäß Figur 13 vor dem Verfüllen der Kammern 70,72 Rohrstücke 74 so in die Kammern eingesetzt, daß der Beton vom Inneren der Rohrstücke ferngehalten wird, so daß durchgehende Kanäle für die Verbindungsbolzen gebildet werden. Wahlweise können jedoch auf die Oberseiten der querverlaufenden Träger 16 auch aufragende Gewindebolzen aufgeschweißt werden, die in die Rohrstücke 74 in den Enden der längsverlaufenden Träger 18 eingreifen.

Wie weiterhin in Figur 13 zu erkennen ist, sind die mit Beton gefüllten Kammern 70,72 mit Bewehrungsstählen 76 armiert. Darüber hinaus wird durch an die Stahlprofile angeschweißte Kopfbolzen 48 eine stabile Verbindung des Betons mit dem Metall erreicht. Wahlweise können zu diesem Zweck auch angeschweißte Stahlbügel verwendet werden, oder es werden Bohrungen in dem Mittelsteg des Stahlprofils vorgesehen, in die geeignete Bindedrähte eingezogen werden.

**Patentansprüche**

1. Regalcontainer mit einer tragenden Rahmenkonstruktion (12) aus senkrechten Stützen (14) und waagerechten Trägern (16,18), die ein ein- oder mehrzelliges quaderförmiges Raumgitter bilden, dadurch **gekennzeichnet**, daß die Stützen (14) und Träger (16,18) als Beton/Stahl-Verbundbauteile ausgebildet sind.

2. Regalcontainer nach Anspruch 1, dadurch **gekennzeichnet**, daß die Stützen (14) und/oder die Träger (16,18) ein geschlossenes Hohlprofil (22) aus Stahl aufweisen, dessen Hohlraum mit Beton (24) ausgefüllt ist.

3. Regalcontainer nach Anspruch 2, dadurch **gekennzeichnet**, daß die Stützen und Träger eine oder mehrere Gruppen bilden, innerhalb derer die Hohlräume der Stahlprofile untereinander verbunden sind und einen einstückigen Betonkern enthalten.

4. Regalcontainer nach einem der vorstehenden Ansprüche, dadurch **gekennzeichnet**, daß jeweils die Stützen (14) und die quer zur Längsrichtung des Containers verlaufenden Träger (16), die in einer gemeinsamen Ebene liegen, zu einem leiter- oder gitterförmigen Rahmenelement (26) verbunden sind und daß die In Längsrichtung des Containers verlaufenden Träger (18) sich durchgehend über die gesamte Länge des Containers erstrecken und auf den Trägern (16) der Rahmenelemente (26) aufliegen.

5. Regalcontainer nach Anspruch 4, dadurch **gekennzeichnet**, daß die Regalböden jeweils durch wenigstens drei längs verlaufende Träger (18) gebildet oder unterfangen werden.

6. Regalcontainer nach einem der vorstehenden Ansprüche, dadurch **gekennzeichnet**, daß die tragende Rahmenkonstruktion (12) wenigstens eine als Beton/Stahl-Verbundbauteil ausgebildete Diagonalstrebe (20) aufweist.

7. Regalcontainer nach dem Oberbegriff des Anspruchs 1, dadurch **gekennzeichnet**, daß die Stützen (14) und Träger (16,18) als geschlossene Hohlprofile aus Stahl ausgebildet sind, deren Hohlräume mit einer Kühlflüssigkeit ausgefüllt sind und miteinander sowie mit einem Vorratstank (52) für die Kühlflüssigkeit kommunizieren.

8. Regalcontainer nach dem Oberbegriff des Anspruchs 1 oder nach einem der vorstehenden Ansprüche, mit einer in den Container (60) integrierten Sprinkleranlage (62), dadurch **gekennzeichnet**, daß zumindest einige der Sprühdüsen (66) der Sprinkleranlage derart auf die tragenden Teile (14,16,18) der Rahmenkonstruktion (12) gerichtet sind, daß diese im Brandfall mit der Löschflüssigkeit besprüht werden.

9.  Regalcontainer nach Anspruch 1, dadurch **gekennzeichnet**, daß die Stützen (14) und Träger (16,18) jeweils ein Doppel-T-Profil (66,68) aufweisen, dessen offene Profilkammern (70,72) mit Beton mit oder ohne Stahlbewehrung ausgefüllt sind.

10.  Verfahren zur Herstellung eines Regalcontainers nach Anspruch 3 oder 9, dadurch **gekennzeichnet**, daß man Stahlprofile für die Stützen (14) und die Träger (16) zunächst gruppenweise derart zu ebenen Rahmen (26) verbindet, daß die Hohlräume oder Kammern sämtlicher Stahlprofile des Rahmens untereinander verbunden sind und daß man die Hohlräume oder Kammern jedes Rahmens (26) jeweils mit fließfähiger Betonmasse verfüllt und daß man die Rahmen durch rechtwinklig zu den Rahmenebenen verlaufende betongefüllte oder mit Kammerbeton versehene Stahlträger (18) verbindet.

Fig. 1

Fig. 2

Fig. 3 (A)

B

B

Fig. 3 (B)

Fig. 4 (A)

B

B

Fig. 4 (B)

Fig. (A)

B

B

Fig. 5 (B)

Fig. 6 (A)

B

B

Fig. 6 (B)

Fig. 7 (A)

Fig. 7 (B)

Fig. 8 (A)

Fig. 8 (B)

Fig. 9 (A)

Fig. 9 (B)

Fig. 10 (A)

Fig. 10 (B)

Fig. 11

Fig. 12

*Fig. 13*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>A | DE-A-2 814 870 (FROMONT M.)<br>* Ansprüche 1,5,7; Abbildungen *<br>--- | 1<br>3,10 | B65G1/02<br>E04B1/30 |
| A | CH-A-535 337 (EUSTACHIO GUARDIANI)<br>* das ganze Dokument *<br>--- | 1,2,9,10 | |
| A | FR-A-1 447 791 (SERGIC S.A.R.L.)<br>ZUSAMMENFASSUNG<br>* Abbildungen *<br>--- | 1,3 | |
| A | FR-A-2 253 685 (MAURER A.)<br>* Ansprüche 1-4; Abbildungen *<br>--- | 7 | |
| A | DE-A-2 016 168 (UNARCO INDUSTRIES INC.)<br>* Ansprüche 1-12; Abbildungen *<br>----- | 8 | |
| | | | **RECHERCHIERTE SACHGEBIETE (Int. Cl.5 )**<br><br>B65G<br>E04B<br>E04H<br>E04G |

Der vorliegende Recherchenbericht wurde für alle Patentansprüche erstellt

| Recherchenort | Abschlußdatum der Recherche | Prüfer |
|---|---|---|
| DEN HAAG | 21 NOVEMBER 1991 | VAN ROLLEGHEM F. |